# EUROPEAN PATENT SPECIFICATION

(11) **EP 4 301 092 B1**
(45) Date of publication and mention of the grant of the patent: **22.07.2026**
(21) Application number: 21927981.7
(22) Date of filing: 26.07.2021
(51) Int. Cl.: G10L 15/22, H05B 6/12, F24C 3/12, F24C 7/04, F24C 15/00, H04L 12/28, H05B 6/06, H04L 12/12, F24C 7/08, F24C 15/10, G10L 15/08

(54) **CONTROLLER AND HEATING COOKER HAVING THE CONTROLLER**
REGLER UND KOCHGERÄT MIT DEM REGLER
DISPOSITIF DE COMMANDE ET APPAREIL DE CUISSON CHAUFFANT DOTÉ DU DISPOSITIF DE COMMANDE

(30) Priority: 25.02.2021 JP 2021028728
(43) Date of publication of application: 03.01.2024
(73) Proprietor: Panasonic Intellectual Property Management Co., Ltd., Kadoma-shi, Osaka 571-0057 (JP)
(72) Inventor: FUJINAMI, Tomoya, Osaka 571-0057 (JP); FURUSAWA, Satoshi, Osaka 571-0057 (JP); HAMAGUCHI, Hideo, Osaka 571-0057 (JP); SADAKATA, Hideki, Osaka 571-0057 (JP); TAKAHASHI, Tomoya, Osaka 571-0057 (JP)
(74) Representative: SSM Sandmair
(86) International application number: PCT/JP2021/027526
(87) International publication number: WO 2022/180885

(56) References cited:
- CN-A- 111 096 680
- JP-A- 2016 186 386
- JP-A- 2019 078 463
- JP-A- 2019 109 510
- JP-A- 2020 003 076
- JP-A- 2020 086 571
- JP-A- 2020 118 857
- US-A1- 2017 069 324
- US-A1- 2019 304 443

## Description

### TECHNICAL FIELD

The present disclosure relates to a controller and a heating cooker having the controller.

### BACKGROUND ART

Development of a technique of controlling an operation of a device using a speech is being advanced. A system that controls an operation of a device using a speech traditionally always monitors whether a certain wake-up word is uttered and, when the system detects the wake-up word, the system waits for a voice command to be uttered next. The system recognizes the voice command uttered thereafter and controls an operation of a device or the like based on the result of the recognition.

In Patent Document 1, a device having a speech recognition function recognizes a speech to determine whether one or plural wake-up word(s) is/are included therein. In the case where a first wake-up word is included therein, the device transmits speech data to a first platform and, in the case where a second wake-up word is included therein, the device transmits the speech data to a second platform.

Patent Document 2 provides another device having speech recognition function for determining one of a plurality of wake-up words.

### PRIOR ART DOCUMENT

### PATENT DOCUMENT

Patent Document 1: JP201986535A
Patent Document 2: JP2020118857A

### SUMMARY OF INVENTION

### TECHNICAL PROBLEM

The platforms in Patent Document 1 can each transmit control data of each external device to be controlled. To control each of plural external devices, it is useful to switch among plural platforms using plural wake-up words while it is unknown whether the switching is useful to control a specific device.

The present disclosure provides a technique of controlling an operation of a specific device using plural wake-up words.

### MEANS FOR SOLVING PROBLEM

According to one aspect of the present disclosure a controller to operate a heating cooker using a voice command is provided.

A heating cooker of one aspect of the present disclosure includes the controller and the plural heating sections.

### ADVANTAGEOUS EFFECT OF INVENTION

According to the present disclosure, the technique of controlling an operation of a specific device using plural wake-up words is provided.

### BRIEF DESCRIPTION OF DRAWINGS

Fig. 1A is a diagram showing a heating cooker incorporating therein a controller of the present disclosure.
Fig. 1B is a diagram showing an example of the configuration for the controller and the heating cooker 1 to each be included in a separate housing and to be connected to each other through a communication line.
Fig. 1C is a diagram showing an example of the configuration for the controller to be loaded on a server device.
Fig. 2 is a hardware configuration diagram of the controller.
Fig. 3 is a perspective diagram of an induction heating cooker according to an exemplary embodiment.
Fig. 4 is a block diagram showing a control system of the induction heating cooker according to the exemplary embodiment.
Fig. 5 is a schematic diagram of the configuration of the induction heating cooker.
Fig. 6 is a partial schematic diagram of operation sections and displaying sections.
Fig. 7A is a flowchart showing a procedure for a process executed by a computing section of the controller.
Fig. 7B is a flowchart showing a procedure for a process executed by a computing section of the controller.
Fig. 8 is a diagram showing an example of informing by a heating section informing signal.

### DESCRIPTION OF EMBODIMENTS

The fact that a user operates a device using a voice command has various types of advantage. For example, the user does not need to directly touch the device because the user can operate the device hand-free. The user can operate the device from a distant place without checking the screen of the device. Even in the case where an instant operation from a distant place is necessary, the user can quickly cope with the case because the user can quickly control the device using a speech. The user can execute a variety of operations apart from the operations that the user executes watching the screen of the device and the user's labor of inputting can be reduced because, using speeches, the user can easily invoke even a setting item present under a deep hierarchy and input thereinto.

In the case where a user operates a device using the above voice commands, the user traditionally first utters a speech called "wake-up word" that is determined in advance, and thereafter further utters an operational word that corresponds to the content of the operation wanted by the user to be executed. The device always receives a speech signal from a microphone, and determines whether the wake-up word is present in the content of the utterance. When the device recognizes the wake-up word, the device starts up its system and stands by for the speech of a subsequent operational word to, in the case where the device recognizes the operational word, execute the operation that corresponds to the operational word. This procedure is smoothly executed in the case where the object to be operated is one, such as the case where the device is a television.

On the other hand, if the device has plural objects to operate, the procedure will be complicated. For example, assume that the device is a heating cooker that includes plural heating sections. The device is, for example, an IH cooking heater including three IH heaters (IH stoves) or a gas cooker including three gas stoves.

An example will be considered where an operation of weakening the heating power for a pan at one certain stove such as, for example, a stove on the right is executed according to the above procedure. The user needs to utter a predetermined wake-up word to start up the heating cooker, next utter "the stove on the right" to identify the object to be operated, and utter "weaken the heating power" to instruct the operation. At least three sessions of utterance are necessary for completing the operation, and a time period corresponding to the number of the sessions is necessary. The user may therefore feel that the time period necessary for the completion of the operation is bothersome in the case, for example, where boiling over seems to be about to occur. Especially, when another loud sound is mixed into the speech of the user undergoing the speech recognition, the speech recognition may not be appropriately executed. The opportunities of the speech recognition need to be reduced.

The inventor of the present application studied a measure to enable reduction of the necessary time period to the completion of the operation taken when a heating cooker is operated using voice commands and reduction of the opportunities of the speech recognition. A wake-up word plays the role of designating the heating cooker but has no direct relation with any operation desired by the user. The inventor reached an idea of using the wake-up word itself as a word to distinguish a stove. For example, the inventor enabled the heating cooker to be started up and, at the same time, the fact that the object to be operated is the stove on the right to be identified, by utterance of "The stove on the right" by a user. When the user thereafter utters the operation desired by the user, the operation for the stove on the right is implemented. The number of the utterance sessions to be executed is thereby reduced and the opportunities of the speech recognition can thereby be reduced, and the necessary time period to the completion of the operation can also be reduced.

Embodiments will be described below in detail with reference to the drawings as necessary. No unnecessarily detailed description may, however, be made. For example, no detailed description of an already well known item and no redundant description for a substantially identical configuration may be made. This is to avoid making the following description unnecessarily redundant and to facilitate understanding by those skilled in the art. The inventor provides the accompanying drawings and the following description for those skilled in the art to fully understand the present disclosure, and the subject matter described in the claims is not limited by the above.

### Embodiment

### (1)Overview

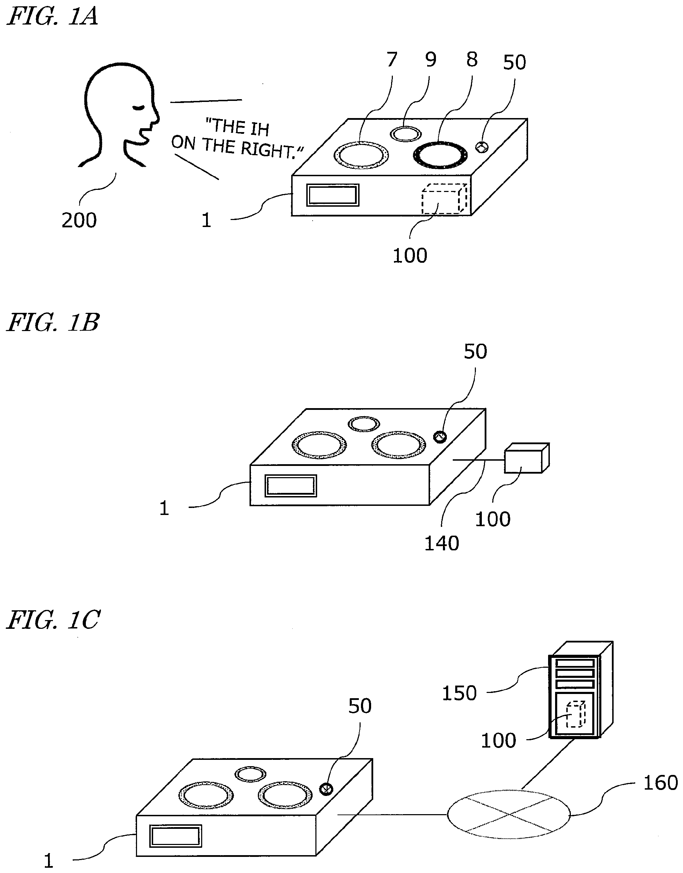

An overview of the configuration and an operation of a controller according to an embodiment of the present disclosure will be described below with reference to Fig. 1A to Fig. 1C.

Fig. 1A shows a heating cooker 1 that incorporates therein the controller 100 of the present disclosure.

The heating cooker 1 is, for example, an induction heating (IH) cooking heater that induction-heats a cooking container using electric power or a gas cooker that heats a cooking container by combusting a gas. It is assumed hereinafter that the heating cooker 1 is an IH cooking heater.

In this embodiment, the heating cooker 1 to be an IH cooking heater includes heating sections 7 to 9 that are three IH heaters. The heating cooker 1 may include a grill that uses an IH heater or a heater as its heat source. The heating cooker 1 includes a microphone 50 that acquires speeches of a user 200 for speech recognition.

The controller 100 receive a speech signal that is output from the microphone 50 responding to utterance of a speech by the user 200, and determines whether a predetermined wake-up word is included in the speech signal. In this embodiment, the wake-up word can be freely determined by the user 200 and set in the controller 100 thereby. The user 200 can set, for example, the heating section 7 as "the IH on the left", the heating section 8 as "the IH on the right", and the heating section 9 as "the IH in the center".

An example is considered where the user 200 ignites the heating section 8 of the heating cooker 1 using a voice command. The user 200 utters "The IH on the right." as the wake-up word. When the controller 100 recognizes the presence of the wake-up word of "the IH on the right", the controller 100 determines that "the IH on the right" is designated as the object to be operated and transitions into a standby mode to stand by for an input of the voice command to operate "the IH on the right". In the standby mode, the controller 100 transmits a control signal to start up the system of the heating cooker 1, and further outputs a "heating section informing signal". The heating section informing signal is a signal transmitted to the heating cooker 1 to inform the user 200 of the fact that the controller 100 recognizes that "the IH on the right" is designated. Based on the heating section informing signal, the heating cooker 1, for example, causes a light emitting section that emits light in a ring shape along the heating coil 8 to emit light and causes a speaker not shown to output therefrom a speech such as "The IH on the right is selected".

The controller 100 continuously executes a recognition process acquiring a speech signal to determine whether any operational word is included in the speech signal. When the controller 100 recognizes that, for example, "Ignite it." is included as an operational word, the controller 100 outputs a control signal to the heating cooker 1. The control signal includes a control command to ignite the heating section 8 that corresponds to "the IH on the right".

According to the above procedure, the user 200 can ignite the heating section 8 by only uttering "The IH on the right." and "Ignite it". The user 200 consequently directly designates the object to be operated and the operation that are desired by the user 200, and this is therefore understandable. The user 200 does not need to memorize any wake-up word that is not related to any operation and therefore the possibility of forgetting the wake-up word or using a wrong wake-up word can be lowered. In addition, the number of use sessions of the wake-up word and the operational word to be speech-recognized can be reduced and short utterance can be made usable, and the speech recognition rate can therefore be improved. The time period to the completion of the operation can be reduced and, even when an instant action is necessary such as, for example, even when boiling over seems to be about to occur, the situation can therefore quickly be coped with.

The controller 100 is incorporated in the heating cooker 1 in Fig. 1A while another example of the configuration can be considered. Fig. 1B shows an example of the configuration for the controller 100 and the heating cooker 1 to each be included in a separate housing and to be connected to each other through a communication line. The controller 100 receives, through the communication line 140, the speech signal output from the microphone 50 of the heating cooker 1. The controller 100 executes the speech recognition process, and transmits the control signal and the heating section informing signal to the heating cooker 1 through the communication line 140 in accordance with the result of the recognition.

Fig. 1C shows an example of the configuration for the controller 100 to be loaded on a server device 150. In other words, the server device 150 has the above function of the controller 100. The server device 150 is connected to a communication network 160 by wire and can receive the speech signal output from the microphone 50 of the heating cooker 1 through the communication network 160.

The above operation can be implemented by any one of the above configurations. The speech recognition process, and a production process and an output process of the control signal do not need to be executed in the one controller 100. For example, the controller 100 in Fig. 1A may cause an external server device to execute only the speech recognition process and may receive only the recognition result. The controller 100 only has to transmit the control signal and the heating section informing signal to the heating cooker 1 in accordance with the recognition result by the server device. For example, in the configuration in Fig. 1B, the communication between the heating cooker 1 and the controller 100 may be executed not by wire but by radio. In the configuration in Fig. 1C, at least a portion of the communication between the heating cooker 1 and the communication network 160 may also be executed by radio.

The above communication by wire and the above communication by radio can each be executed complying with a known communication standard. For example, the communication by wire can be executed complying with the Ethernet (a registered trademark) standard, the USB (a registered trademark) standard, or the like. The communication by radio can be executed complying with the IEEE 802.11 standard relating to a local area network (LAN), the fourth generation/fifth generation mobile communication system relating to the mobile communication and referred to as what-is-called 4G/5G, or the like.

### (2)Details

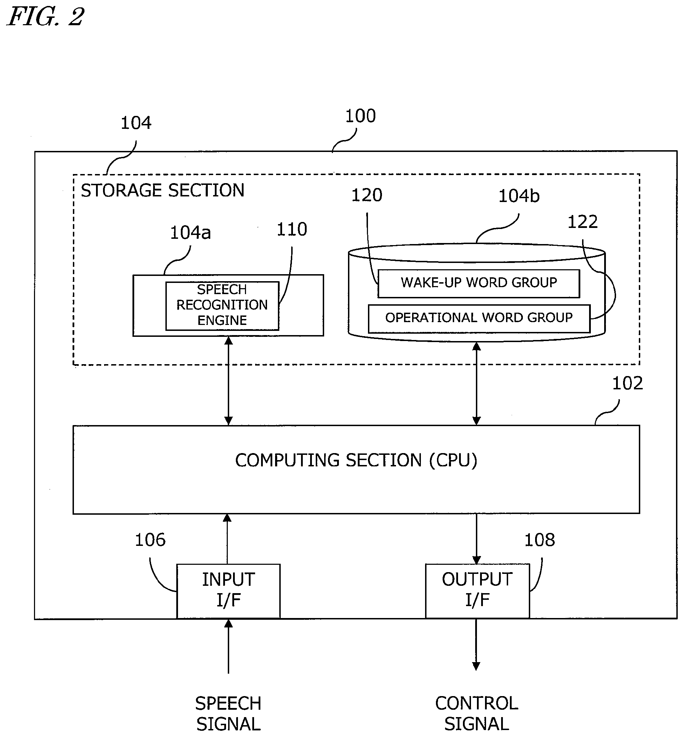

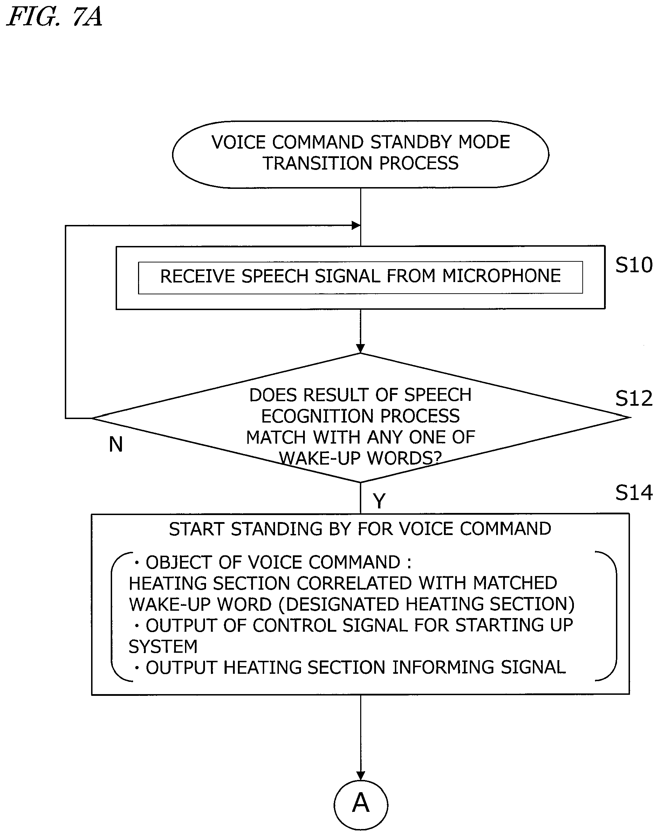

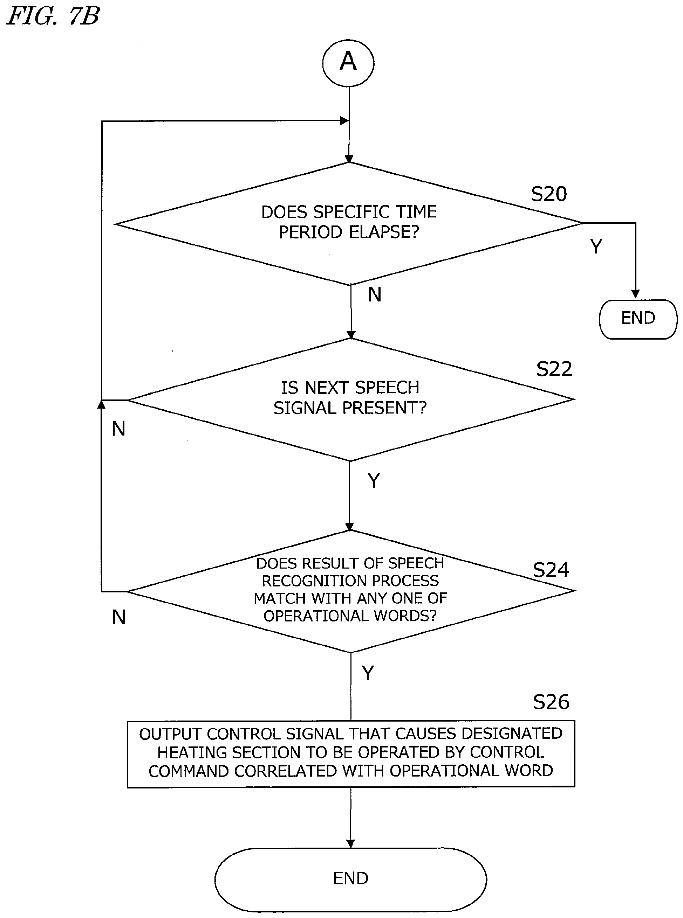

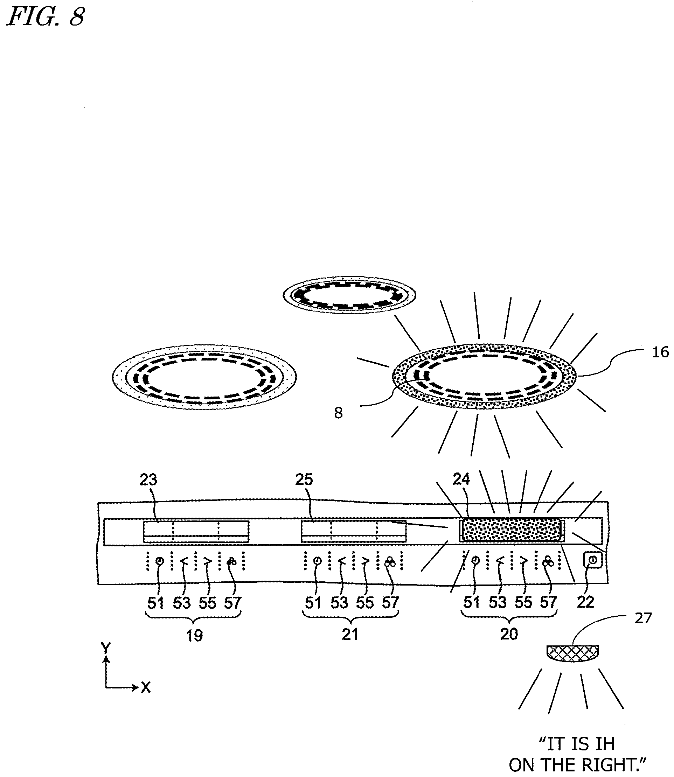

The configuration of each of the controller 100 and the heating cooker 1 will be described below with reference to Fig. 2 to Fig. 6. The operation of the controller 100 and that of the heating cooker 1 associated with the controller 100 will thereafter be described with reference to Fig. 7A, Fig. 7B, and Fig. 8. In the following description, the description will be made pursuant to the example of the configuration shown in Fig. 1A.

### <<Controller>>

Fig. 2 is a hardware configuration diagram of the controller 100.

The controller 100 includes a computing section 102, a storage section 104, an input interface (I/F) 106, and an output interface (I/F) 108.

The computing section 102 is a computing circuit that executes the processes described later, and includes a signal processing circuit such as, for example, a CPU or a microcontroller (a microcomputer).

The storage section 104 is one or plural storage device(s) each capable of writing and reading of data. One example of the storage device is a ROM, a RAM, a flash memory, a hard disc drive, or an SSD. In this embodiment, the storage section 104 includes a RAM 104a and a flash memory 104b.

The input I/F 106 and the output I/F 108 are connected to an internal bus not shown of the heating cooker 1. The input I/F 106 receives the sensor output signal and the speech signal output from the microphone 50 of the heating cooker 1. The output I/F 108 outputs the control signal to a control section of the heating cooker 1 described later.

The storage section 104 will be described below in more detail.

The RAM 104a retains therein a speech recognition engine 110 that is a computer program to be executed by the computing section 102. The computing section 102 can, by executing the speech recognition engine 110, recognize a word uttered by the user 200 that is included in the speech signal received thereby through an input I/F 106. An optional existing speech recognition technique is usable for the recognition process by the speech recognition engine 110. The detailed content of the speech recognition technique will not be described.

The flash memory 104b stores therein a wake-up word group 120 and an operational word group 122. The wake-up word group 120 is a set of various wake-up words. Table 1 shows an example of the wake-up word group 120.

**[Table 1]**

| Wake-Up Word | Control Command |
|---|---|
| IH on the left | IH7 |
| IH on the right | IH8 |
| IH in the center | IH9 |
| Grill | IHG |

Each wake-up word is correlated with a control command. The control command is an order that indicates which heating section is to be operated by the voice command. The control section 31 of the heating cooker 1 executes the process determining the heating section designated by the control command as the heating section to be operated.

At the time of the shipment of the heating cooker 1 or the controller 100, a default value of each wake-up word is set therein. An optional wake-up word is changeable by the user 200. When one or plural wake-up word(s) is/are changed, the existing wake-up word(s) is/are rewritten into the wake-up word(s) after the change in the flash memory 104b by the control of the computing section 102. The control commands are not rewritten.

The operational word group 122 is a set of various operational words. Table 2 shows one example of the operational word group 122.

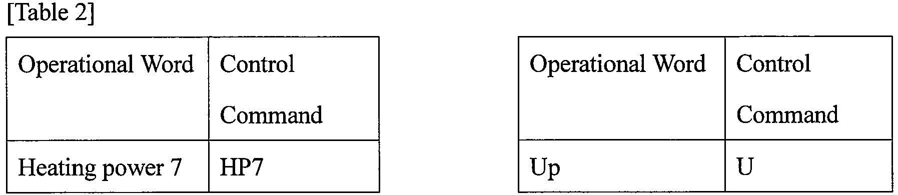

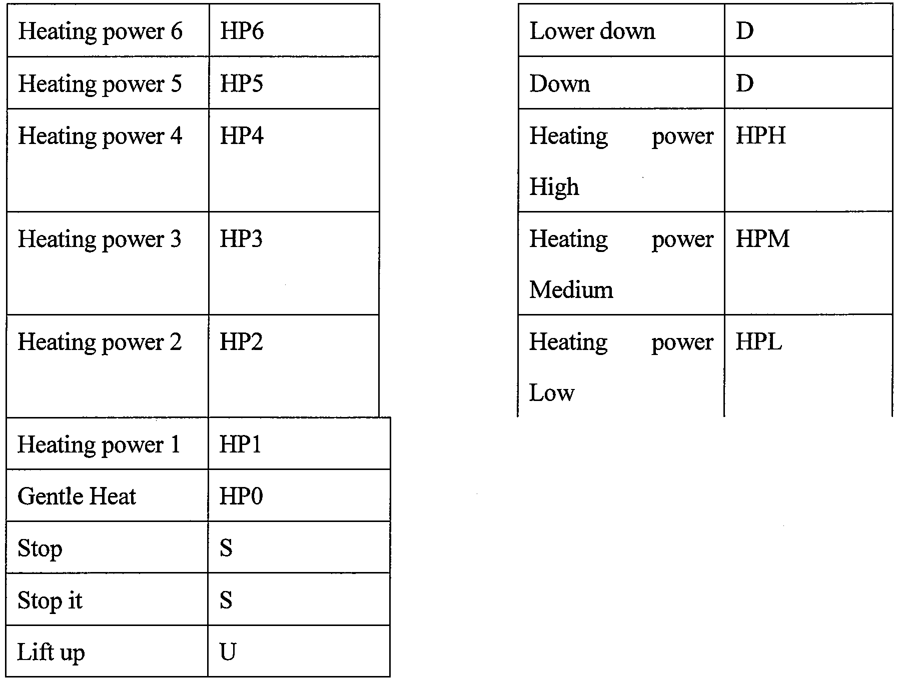

Each of the operational words is also correlated with a control command. The control command is an order indicating what operation is executed. The control section 31 of the heating cooker 1 executes the operation designated by the control command.

The computing section 102 can recognize whether any wake-up word is included in a speech uttered by the user 200 and, in the case where a wake-up word is included in the speech, can also recognize which heating section the wake-up word corresponds to, by using the speech recognition engine 110, the wake-up word group 120, and the operational word group 122. The computing section 102 thereafter continues the speech recognition and can thereby also recognize whether any operational word is included in a speech uttered by the user 200 and, in the case where an operational word is included in the speech, can recognize what operational word the included operational word is.

### <<Heating Cooker>>

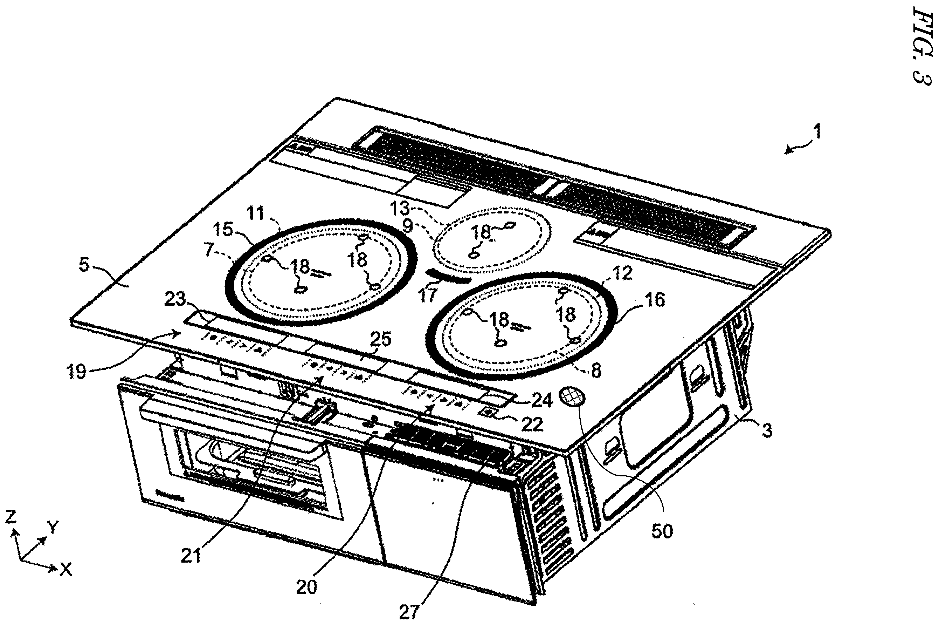

An induction heating cooker according to the embodiment of the present disclosure will be described below with reference to Figs. 3 to 6.

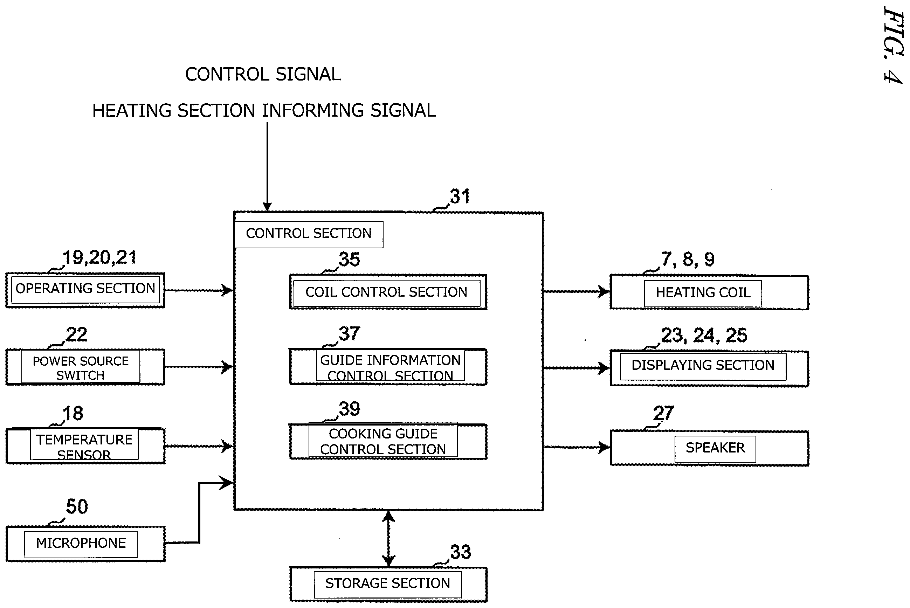

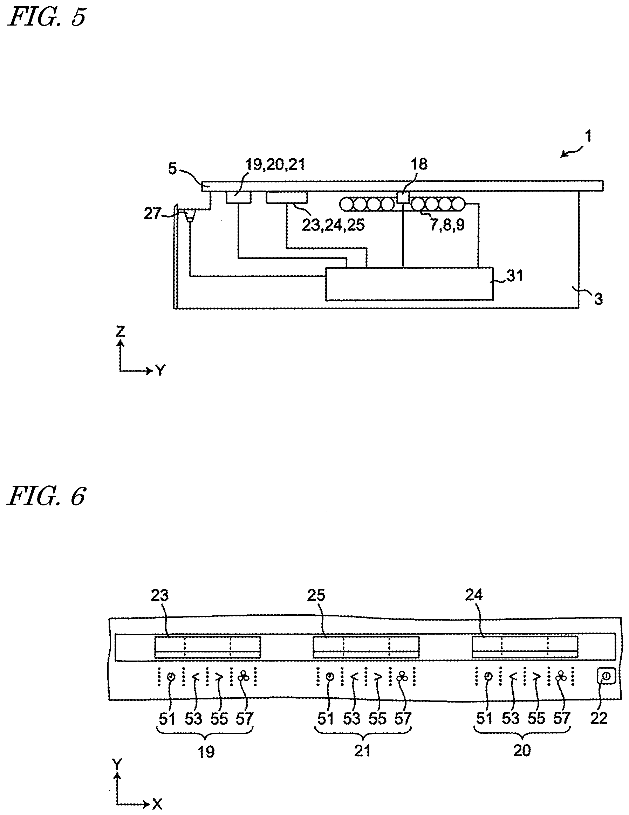

Fig. 3 is a perspective diagram of the induction heating cooker 1 according to the exemplary embodiment. Fig.4 is a block diagram showing a control system of the induction heating cooker 1 according to the embodiment. Fig. 5 is a schematic diagram of the configuration of the induction heating cooking appliance 1.

In some of the drawings according to the present discloser, an X-axis, a Y-axis, and/or a Z-axis are shown. When a user faces the induction heating cooker to use the induction heating cooker, the X-axis direction indicates the width direction (the longitudinal direction) of the heating cooker, the Y-axis direction indicates the depth direction (the transverse direction), and the Z-direction indicates the height direction. It is assumed that the positive direction of the X-axis is the rightward direction and the negative direction thereof is the leftward direction. It is also assumed that the positive direction of the Y-axis is the backward direction and the negative direction thereof is the frontward direction.

### <<Induction Heating Cooker>>

A common configuration of the induction heating cooker 1 according to the present disclosure will first be described.

As shown in Fig. 3, the induction heating cooker 1 includes a main body 3 and a top plate 5 that is disposed on the upper face of the main body 3, to have a container placed thereon. The container holds therein a container to be heated that holds therein cooking ingredients to be cooked such as, for example, a stew.

In the inside of the main body 3 of the induction heating cooker 1, more precisely, at positions on the lower side (the -Z side) of container placing areas of the top plate 5 of the induction heating cooker 1. heating coils 7, 8, and 9 are disposed. The heating coils 7 to 9 each generate an inductive magnetic field to induction-heat a container. The induction heating cooker 1 includes the three heating coils 7 to 9 while the induction heating cooker 1 may include one, two, or four or more heating coil(s).

In the induction heating cooker 1, operation sections 19, 20, and 21 that each are physically operable to operate, for example, respectively the heating coils 7, 8, and 9 are disposed. The heating coils 7, 8, and 9 "correspond" respectively to the operation sections 19, 20, and 21. As above, the constituent elements disposed respectively for the heating coils 7, 8, and 9 are herein referred to as constituent elements that "correspond" to the heating coils.

As shown in Fig. 3, on the top plate 5 on the upper side (the +Z side) of the heating coils 7 to 9, ring-shaped markers 11, 12, and 13 each indicating the container placing area are printed "corresponding" respectively to the heating coils 7, 8, and 9.

In the top view, light emitting sections 15 and 16 each emitting light in a ring shape are disposed on the outer side respectively of the heating coils 7 and 8 on the top plate 5. An arc-shaped light emitting section 17 is disposed on the front side (the -Y side) of the heating coil 9 on the top plate 5. The light emitting sections 15 to 17 each emit light when, for example, an electric current flows through one of the heating coils 7 to 9 that corresponds thereto. The light emitting sections 15 to 17 each include, for example, an LED light emitting substrate not shown.

A temperature sensor 18 is disposed on the lower side of the top plate 5 and on the inner side of each of the markers 11 to 13. A detection value detected by the temperature sensor 18 is sent to the control section 31. The control section 31 adjusts the amount of an electric current flowing through each of the heating coils 7 to 9 referring to the detection value of the temperature, and determines the timing of providing an assistance guide of the cooking method.

The operation sections 19, 20, and 21 are disposed on the front side (the -Y side) of the top plate 5 of the induction heating cooker 1. The operation sections 19, 20, and 21 are used by the user to operate respectively the heating coils 7 to 9. The operation section 19 is disposed to operate the heating coil 7, the operation section 20 is disposed to operate the heating coil 8, and the operation section 21 is disposed to operate the heating coil 9. The operation section 19 herein corresponds to the heating coil 7, the operation section 20 herein corresponds to the heating coil 8, and the operation section 21 herein corresponds to the heating coil 9.

Displaying sections 23, 24, and 25 are disposed on the front side of the top plate 5 of the induction heating cooker 1 and between the heating coils 7 to 9 and the operation sections 19 to 21. The displaying sections 23, 24, and 25 display the states of those to be operated respectively by the operation sections 19 to 21. The operations of the displaying sections 23 to 25 are controlled by the control section 31 described later.

The displaying sections 23 to 25 each include, for example, a matrix dot liquid crystal displaying device. The matrix dot liquid crystal displaying device is, for example, a full dot liquid crystal displaying panel that has a belt-like shape extending in the width direction of the top plate 5.

The displaying sections 23 to 25 display the states of those to be operated, the contents of the operations of the heating coils 7 to 9, and the like, using picture objects. For example, the displaying section 23 displays thereon the content of the operation of the heating coil 7, the displaying section 24 displays thereon the content of the operation of the heating coil 8, and the displaying section 25 displays thereon the content of the operation of the heating coil 9.

An image object is a letter(s) and/or an image(s). For example, the image object is letters that are "heating". At this time, it is indicated thereby that the induction heating cooker 1 can execute a heating operation using one of the heating coils 7 to 9 that corresponds to the one of the displaying sections 23 to 25. The displaying sections 23 to 25 may each display thereon an image object of the letters of "start" that indicate the start of the heating, together with the letters of "heating". After the heating is started, the displaying sections 23 to 25 may display thereon image objects such as the number indicating the magnitude of the heating amount (the heating power) of each of the heating coils 7 to 9, and an icon.

The displaying sections 23 to 25 may each be a segment display liquid crystal displaying device. The letters and/or images each displayed thereon using one or plural segment(s) are in the category of the above image object.

The main body 3 includes a speaker 27 that outputs, using a speech, the information relating to the heating of the heating coils 7 to 9. The speaker 27 is disposed on the front face side of the induction heating cooker 1 and outputs a guide by a speech to the user.

As shown in Fig. 4, the induction heating cooker 1 includes the control section 31 and the storage section 33, inside the main body 3. The control section 31 includes a signal processing circuit such as, for example, a CPU, or a microcontroller (a microcomputer). The storage section 33 is a storage device such as a ROM, a RAM, a hard disc drive, or an SSD. The storage section 33 stores therein a computer program to cause the induction heating cooker 1 to operate. The control section 31 is configured to achieve various functions described later by executing the computer programs.

Executing the computer program, the control section 31 functions as a coil control section 35 that controls the amount of the electric current to be caused to flow through each of the heating coils 7 to 9, a guide information control section 37 that controls the displaying area of each of the displaying sections 23 to 25, a guide information control section 45 that controls the display output of the guide information, and a cooking guide control section 47 that controls the information output of the cooking guide, depending on the moment. Some or all of the coil control section 35, the guide information control section 37, and the cooking guide control section 47 may not be implemented as software, and may be configured by one or plural CPU(s), microprocessor(s), or FPGA(s).

Output signals of the operation sections 19 to 21 are input into the control section 31. The control section 31 sets the heating amount and the like of each of the heating coils 7 to 9 in accordance with an operation. In accordance with an operational instruction of the operation section 19, the control section 31 functioning as the coil control section 35 controls the start or the stop of the heating by the heating coil 7. The coil control section 35 executes the heating of the container placed on the top plate 5 by supplying a high frequency current to each of the heating coils 7 to 9. The coil control section 35 controls the heating amount from each of the heating coils 7 to 9 by controlling the amount of the current caused to flow through each of the heating coils 7 to 9. Output signals of the operation sections 19 to 21 are already input into the control section 31 and are therefore used also for controlling the operations of the control section 31 functioning as the guide information control section 37 and the cooking guide control section 39.

The cooking guide control section 39 sends cooking guide information to the guide information control section 37 at the timing at which proper conditions are established, following a heating sequence or a cooking sequence determined in advance. The proper conditions are the condition such as whether the temperature detected by the temperature sensor 18 satisfies the temperature condition determined in advance or whether a time period determined in advance elapses after the detected temperature reaches the temperature determined in advance. These conditions are set for each of assistance menus that guide the cooking. When the cooking guide control section 39 determines that these conditions are satisfied, the cooking guide control section 39 instructs the guide information control section 37 to display the cooking guide that corresponds to the conditions, from the displaying sections 23 to 25. The heating sequence, the cooking sequence, and the cooking guide are stored in the storage section 33.

The control section 31 receives the control signal and the heating section informing signal output from the controller 100.

When the control section 31 receives the control signal, the control section 31 analyzes a control command included in the control signal. When the controller 100 recognizes a wake-up word, the controller 100 designates one of the heating sections to be operated, using the control command. The control section 31 recognizes the designated heating section based on the control command. The heating section designated by the control command is herein referred to as "designated heating section". When the controller 100 recognizes an operational word, the controller 100 designates the operation to be executed, using a control command. The control section 31 recognizes the operation to be executed, based on the control command.

When the control section 31 receives the heating section informing signal, the control section 31 executes the operation designated by the heating section informing signal. It is assumed that, for example, the heating section informing signal is a signal that causes the light emitting section corresponding to the designated heating section to blink, or that causes the display state of the displaying section corresponding to the designated heating section to vary. At this time, the control section 31 causes the blinking state of the light emitting section to vary, or causes the display state of the displaying section to vary. In the case where the heating section informing signal is a signal that causes the speaker 27 to output therefrom a speech indicating the designated heating section, the control section 31 causes the speaker 27 to output therefrom the speech indicating the designated heating section.

### <<Displaying Section and Operation Section>>

The displaying sections 23 to 25 and the operation sections 19 to 21 will then be described with reference to Fig. 6. The operation sections 19 to 21 each include a first operation section 51, a second operation section 53, a third operation section 55, and a fourth operation section 57. The first operation section 51 to the fourth operation section 57 may each be, for example, a touch switch that includes a capacitance switch, or a pushbutton switch. The first operation section 51 to the fourth operation section 57 each set a heating operation of the corresponding one of the heating coils 7 to 9. The first operation section 51 has a design of a clock printed thereon and is used mainly to select a timer setting. The second operation section 53 and the third operation section 55 each have a design of an arrow such as, for example, a symbol of "<" or ">", printed thereon, and are used mainly to select a menu and set a heating power amount and a time period of a timer. The fourth operation section 57 has a design indicating a heating area that corresponds to the operation section printed thereon, and functions as a multi-functional switch to which a different function is assigned depending on the situation. A power source switch 22 has a function of turning on the power source of the induction heating cooker 1. The power source switch 22 may further have a function of turning off the power source of the induction heating cooker 1. A switch to turn off the power source may be disposed separate from the switch 22.

### <<Operation of Controller>>

Fig. 7A and Fig. 7B are flowcharts each showing a procedure for a process executed by the computing section 102 of the controller 100.

At step S10, the computing section 102 receives a speech signal from the microphone 50 of the heating cooker 1.

At step S12, the computing section 102 determines whether the result of the speech recognition process matches with any one of the wake-up words. In the case where the result matches with one of the wake-up words, the process advances to step S14 and, in the case where the result does not match therewith, the process returns to step S10. Advancing to step S14 means that the computing section 102 recognizes the designated heating section based on the wake-up word.

At step S14, the computing section 102 starts to stand by for a voice command. The computing section 102 transitions into the standby mode in which the computing section 102 stands by for an input of a voice command to operate the designated heating section.

When the computing section 102 transitions into the standby mode, the computing section 102 outputs a heating section informing signal to cause the heating cooker 1 to inform the user 200 therefrom which heating section is recognized to be operated.

Fig. 8 shows an example of the informing by a heating section informing signal. As shown in Fig. 1A, it is assumed that the user 200 utters "the IH on the right" and the computing section 102 recognizes the heating coil 8 as the designated heating section. Based on the hating section informing signal output from the computing section 102, the control section 31 of the heating cooker 1 causes the light emitting section 16 corresponding to the heating coil 8 that is the IH on the right to emit light, causes the displaying section 24 to blink or the like to thereby vary the display state, or causes the speaker 27 to output a speech that is "It is the IH on the right". The user can thereby visually or aurally check whether the heating section that the user desires to operate is properly recognized. For the method of informing, at least one of the light emitting section 16, the displaying section 14, and the speaker 27 only has to be used while the informing may be executed using another method. In the case, for example, where the heating cooker 1 is connected to a smartphone or a smartwatch of the user, the informing may be executed by transmission of a message that reports the designated heating section to the smartphone or the smartwatch and vibration thereof.

Fig. 7B will be referred to next. The process in Fig. 7B is executed after the computing section 102 transitions into the standby mode.

At step S20, the computing section 102 determines whether a specific time period elapses. In the case where the specific time period such as, for example, 10 seconds elapses, the standby mode comes to an end and the procedure returns again to the first process step in Fig. 7A. This process step means that the state of the standby mode, that is, the operation for the designated heating section by the voice command is limited to be executed in the specific time period. No operational word is caused to be permanently stood by for after transitioning once into the standby mode, and recognition of any speech not intended by the user can thereby be avoided. In the case where the specific time period does not elapse, the process advances to step S22.

At step S22, the computing section 102 determines whether any next speech signal is received from the microphone 50. When no speech signal is input, the process returns to step S20. In the case where a speech signal is input, the process advances to step S24.

At step S24, the computing section 102 determines whether the result of the speech recognition process matches with any one of the operational words. In the case where the result does not match therewith, the process returns to step S20. In the case where the result matches therewith, the process advances to step S26.

At step S26, the computing section 102 outputs a control signal to cause the designated heating section to be operated using the control command that is correlated with the operational word. At this time, the computing section 102 may further output an operation informing signal. The operation informing signal is a signal to cause a speech, or the display by the displaying section or the like to inform the user 200 which operational word is recognized. The user can thereby visually or aurally check whether the operation desired by the user 200 is properly recognized by the heating section that the user 200 desires to operate.

### (3)Modification Example

A modification example will be described below.

The user 200 may, immediately after uttering a speech once, notice that a voice command is wrong and may again utter the right voice command. For example, immediately after uttering "The IH on the right", the user 200 may utter "I made a mistake. The IH on the left". Even in this case, the input I/F 106 sequentially receives the speech signals, and the computing section 102 of the controller 100 can appropriately recognize each of the voice commands using the speech recognition engine 110 and the wake-up word group 120. Which voice command the recognition of the designated heating section is based on is optional. It is, however, strongly presumed that the reason for uttering again for correction is that the user corrects the mistaken utterance. When the input I/F 106 consecutively receives the speech signals within a predetermined time period, the computing section 102 employs the result of the speech recognition process executed for the speech signal received finally, of the results of the speech recognition processes executed for the speech signals. The computing section 102 determines whether the speech recognized finally matches with any one of plural wake-up words. The operation taking the behavior of the user 200 into consideration can thereby be implemented. The similar process is also applicable to operational words.

In the above heating cooker 1, the control section 31 can accept the operation using a speech and the operation using each of the operation sections 19 to 21. The operation using a speech and the operation for the operation section may therefore be executed at the same time or at a short time interval. In such a case, in this embodiment, the control section 31 prioritizes the operation executed for each of the operation sections 19 to 21 over the operation using a speech.

The embodiments of the induction heating cooker 1 according to the present disclosure have been described as above. The processes based on the above flowcharts are implemented as the operations of the control section 31 by the computer program. The computer program can be stored in the storage section 33 and executed by the control section 31.

### INDUSTRIAL APPLICABILITY

An exemplary controller of the present disclosure is applicable to a use of operating a heating cooker using a voice command.

### REFERENCE SIGNS LIST

1 heating cooker
3 main body
5 top plate
7, 8, 9 heating coil
11, 12, 13 marker
15, 16, 17 light emitting section
18 temperature sensor
19, 20, 21 operation input section
22 power source switch
23, 24, 25 displaying section
27 speaker
31 control section
33 storage section
50 microphone
100 controller
102 computing section
104 storage section
106 input interface (input I/F)
108 output interface (output I/F)
150 server device
160 communication network

## Claims

1. A controller (100) to operate a heating cooker (1) using a voice command, wherein
the heating cooker (1) comprises a plurality of heating sections (7, 8, 9), and wherein
the controller (100) comprises:
a storage section (104) storing therein a plurality of wake-up words that are each different from each other and that are each correlated with one of the plurality of heating sections (7, 8, 9);
an input interface (106) configured to receive a speech signal output from a microphone (50) responding to an utterance of a speech; and
a computing section (102) configured to, in a case where a result of a speech recognition process for the speech signal matches with any one of the plurality of wake-up words, transition into a standby mode in which the computing section (102) stands by for an input of a voice command to operate a designated heating section that is one of the heating sections (7, 8, 9) correlated with the matched wake-up word, of the plurality of heating sections (7, 8, 9),
**characterized in that**
when the input interface (106) consecutively receives speech signals in a predetermined time period, the computing section (102) is configured to determine whether a result of a speech recognition process for the speech signal received finally of results of speech recognition processes for the speech signals matches with any one of the plurality of wake-up words.

2. The controller (100) according to claim 1, further comprising
an output interface (108) configured to output a control signal to the heating cooker (1), wherein
the storage section (104) is further configured to store therein a plurality of operational words that are each different from each other and that are each correlated with one of a plurality of control commands, wherein
the input interface (106) is configured to receive a second speech signal that is a speech signal output following the speech signal, and wherein
in the standby mode, in a case where a result of a speech recognition process for the second speech signal matches with any one of the plurality of operational words, the computing section (102) is configured to output, to the heating cooker (1), a control signal that causes the designated heating section to be operated using a control command correlated with the matched operational word.

3. The controller (100) according to claim 1 or 2, wherein
in the standby mode, the computing section (102) is configured to output a heating section informing signal to inform of the designated heating section of the plurality of heating sections (7, 8, 9).

4. The controller (100) according to claim 3, wherein
the heating cooker (1) comprises light sources (15, 16, 17) or displaying sections (23, 24, 25) that are disposed each being correlated with one of the plurality of heating sections (7, 8, 9), and wherein
the heating section informing signal is a signal that causes a lighting state of one of the light sources (15, 16, 17) or a display state of one of the displaying sections (23, 24, 25) that is correlated with the designated heating section, to vary.

5. The controller (100) according to claim 3, wherein
the heating cooker (1) comprises a speaker (27), and wherein
the heating section informing signal is a signal to cause the speaker (27) to output therefrom a speech that indicates the designated heating section.

6. The controller (100) according to claim 5, wherein
the computing section (102) is configured to output an operation informing signal that causes the speaker (27) to output therefrom a speech that indicates the matched operational word, to the heating cooker (1) through the output interface (108) together with the output of the control signal.

7. The controller (100) according to any one of claims 1 to 6, wherein
the plurality of wake-up words are each changeable, and wherein
when at least one of the plurality of wake-up words is changed, the storage section (104) is configured to rewrite an existing wake-up word into a wake-up word after the change.

8. The controller (100) according to claim 2, wherein
when the input interface (106) consecutively receives second speech signals in a predetermined time period in the standby mode, the computing section (102) is configured to determine whether a result of a speech recognition process for the second speech signal received finally, of results of speech recognition processes for the second speech signals, matches with any one of the plurality of operational words.

9. A server device (150) comprising:
the controller (100) according to any one of claims 1 to 8, wherein
the server device (150) is capable of receiving the speech signal output from the microphone (50).

10. A heating cooker (1) comprising:
the controller (100) according to any one of claims 1 to 8; and
the plurality of heating sections (7, 8, 9).

11. The heating cooker (1) according to claim 10, further comprising:
an operation section (19, 20, 21) capable of being physically operated by a user;
and
a control section (31) capable of accepting an operation by the voice command and an operation by the operation section (19, 20, 21).

12. The heating cooker (1) according to claim 11, wherein
when the control section (31) accepts the operation by the voice command and the operation by the operation section (19, 20, 21) in a specific time period, the control section (31) is configured to prioritize the operation by the operation section (19, 20, 21).

13. The heating cooker (1) according to any one of claims 10 to 12, wherein
the plurality of heating sections (7, 8, 9) each heat a cooking container using a gas or electric power.

## Patentansprüche

1. Steuergerät (100) zum Betreiben eines Heizkochers (1) mittels eines Sprachbefehls, wobei
der Heizkocher (1) mehrere Heizabschnitte (7, 8, 9) umfasst, und wobei
die Steuerung (100) umfasst:
einen Speicherabschnitt (104), in dem eine Vielzahl von Aktivierungswörtern gespeichert ist, die sich jeweils voneinander unterscheiden und die jeweils mit einem der Vielzahl von Heizabschnitten (7, 8, 9) korreliert sind;
eine Eingabeschnittstelle (106), die so konfiguriert ist, dass sie ein Sprachsignal empfängt, das von einem Mikrofon (50) ausgegeben wird, das auf eine gesprochene Äußerung reagiert; und
einen Rechenabschnitt (102), der so konfiguriert ist, dass er in einem Fall, in dem ein Ergebnis eines Spracherkennungsprozesses für das Sprachsignal mit einem der mehreren Weckwörter übereinstimmt, in einen Standby-Modus wechselt, in dem der Rechenabschnitt (102) auf die Eingabe eines Sprachbefehls wartet, um einen bestimmten Heizabschnitt zu betreiben, der einer der Heizabschnitte (7, 8, 9) ist,
**dadurch gekennzeichnet, dass**
wenn die Eingabeschnittstelle (106) innerhalb eines vorbestimmten Zeitraums nacheinander Sprachsignale empfängt, der Rechenabschnitt (102) so konfiguriert ist, dass er bestimmt, ob ein Ergebnis eines Spracherkennungsprozesses für das zuletzt empfangene Sprachsignal unter den Ergebnissen der Spracherkennungsprozesse für die Sprachsignale mit einem der mehreren Aktivierungswörter übereinstimmt.

2. Steuergerät (100) nach Anspruch 1, ferner umfassend
eine Ausgabeschnittstelle (108), die so konfiguriert ist, dass sie ein Steuersignal an den Heiz-Kocher (1) ausgibt, wobei
der Speicherabschnitt (104) ist ferner so konfiguriert, dass er eine Vielzahl von Betriebswörtern speichert, die sich jeweils voneinander unterscheiden und jeweils mit einem von einer Vielzahl von Steuerbefehlen korrelieren, wobei
die Eingabeschnittstelle (106) so konfiguriert ist, dass sie ein zweites Sprachsignal empfängt, das ein auf das Sprachsignal folgendes Sprachsignal ist, und wobei
im Standby-Modus, in einem Fall, in dem ein Ergebnis eines Spracherkennungsprozesses für das zweite Sprachsignal mit einem beliebigen der mehreren Betriebswörter übereinstimmt, der Rechenabschnitt (102) so konfiguriert ist, dass er an den Heizkocher (1) ein Steuersignal ausgibt, das bewirkt, dass der bestimmte Heizabschnitt unter Verwendung eines mit dem übereinstimmenden Betriebswort korrelierten Steuerbefehls betrieben wird.

3. Steuergerät (100) nach Anspruch 1 oder 2, wobei
im Standby-Modus der Rechenabschnitt (102) so konfiguriert ist, dass er ein Heizabschnitt-Informationssignal ausgibt, um den bestimmten Heizabschnitt aus der Vielzahl von Heizabschnitten (7, 8, 9) mitzuteilen.

4. Steuergerät (100) nach Anspruch 3, wobei
der Heizkocher (1) Lichtquellen (15, 16, 17) oder Anzeigeabschnitte (23, 24, 25) umfasst, die jeweils in Zuordnung zu einem der mehreren Heizabschnitte (7, 8, 9) angeordnet sind, und wobei
das Signal zur Anzeige des Heizabschnitts ist ein Signal, das eine Änderung des Leuchtzustands einer der Lichtquellen (15, 16, 17) oder des Anzeigestatus eines der Anzeigeabschnitte (23, 24, 25) bewirkt, die mit dem jeweiligen Heizabschnitt korrelieren.

5. Steuergerät (100) nach Anspruch 3, wobei
der Heizkocher (1) einen Lautsprecher (27) umfasst, und wobei
das Signal zur Anzeige des Heizabschnitts ein Signal ist, das bewirkt, dass der Lautsprecher (27) eine Sprachansage ausgibt, die den zugewiesenen Heizabschnitt angibt.

6. Steuergerät (100) nach Anspruch 5, wobei
der Rechenabschnitt (102) so konfiguriert ist, dass er ein Betriebsinformationssignal, das den Lautsprecher (27) veranlasst, eine Sprachausgabe auszugeben, die das übereinstimmende Betriebswort angibt, zusammen mit der Ausgabe des Steuersignals über die Ausgabeschnittstelle (108) an den Heizkocher (1) ausgibt.

7. Steuergerät (100) nach einem der Ansprüche 1 bis 6, wobei
die mehreren Weckwörter jeweils änderbar sind, und wobei
wenn mindestens eines der mehreren Weckwörter geändert wird, der Speicherabschnitt (104) so konfiguriert ist, dass er ein vorhandenes Weckwort nach der Änderung in ein Weckwort umschreibt.

8. Steuergerät (100) nach Anspruch 2, wobei
der Rechenabschnitt (102) so konfiguriert ist, dass er bestimmt, ob ein Ergebnis eines Spracherkennungsprozesses für das zuletzt empfangene zweite Sprachsignal unter den Ergebnissen der Spracherkennungsprozesse für die zweiten Sprachsignale mit einem der mehreren Betriebswörter übereinstimmt, wenn die Eingabeschnittstelle (106) im Standby-Modus innerhalb eines vorbestimmten Zeitraums nacheinander zweite Sprachsignale empfängt.

9. Servervorrichtung (150), umfassend:
das Steuergerät (100) gemäß einem der Ansprüche 1 bis 8, wobei
die Servervorrichtung (150) in der Lage ist, das vom Mikrofon (50) ausgegebene Sprachsignal zu empfangen.

10. Kochgerät (1), umfassend:
das Steuergerät (100) gemäß einem der Ansprüche 1 bis 8; und
die mehreren Heizabschnitte (7, 8, 9).

11. Heizkocher (1) nach Anspruch 10, ferner umfassend:
einen Bedienabschnitt (19, 20, 21), der von einem Benutzer physisch bedient werden kann; und
einen Steuerabschnitt (31), der in der Lage ist, eine Bedienung durch den Sprachbefehl und eine Bedienung durch den Bedienabschnitt (19, 20, 21) zu akzeptieren.

12. Heizkocher (1) nach Anspruch 11, wobei
der Steuerabschnitt (31) so konfiguriert ist, dass er der Bedienung durch den Bedienabschnitt (19, 20, 21) Vorrang einräumt, wenn der Steuerabschnitt (31) die Bedienung durch den Sprachbefehl und die Bedienung durch den Bedienabschnitt (19, 20, 21) innerhalb eines bestimmten Zeitraums akzeptiert.

13. Heizkocher (1) nach einem der Ansprüche 10 bis 12, wobei
die mehreren Heizabschnitte (7, 8, 9) jeweils einen Kochbehälter unter Verwendung von Gas oder elektrischer Energie erwärmen.

## Revendications

1. Dispositif de commande (100) permettant de faire fonctionner un appareil de cuisson (1) au moyen d'une commande vocale,
ledit appareil de cuisson (1) comprenant une pluralité de sections de chauffage (7, 8, 9), et
ledit dispositif de commande (100) comprenant :
une section de stockage (104) dans laquelle est stockée une pluralité de mots de réveil qui sont chacun différents les uns des autres et qui sont chacun corrélés à l'une des sections de chauffage (7, 8, 9),
une interface d'entrée (106) configurée pour recevoir un signal vocal émis par un microphone (50) en réaction à une énonciation de parole, et
une section de calcul (102) configurée pour passer en mode veille, dans le cas où le résultat d'un processus de reconnaissance vocale relatif au signal vocal correspond à l'un quelconque des mots de réveil, dans lequel 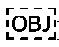 mode la section de calcul (102) attend une entrée de commande vocale visant à faire fonctionner une section de chauffage désignée, consistant en l'une des sections de chauffage (7, 8, 9) qui est corrélée au mot de réveil correspondant, parmi la pluralité de sections de chauffage (7, 8, 9) ;
**caractérisé en ce que**
lorsque l'interface d'entrée (106) reçoit consécutivement des signaux vocaux pendant une période prédéterminée, la section de calcul (102) est configurée pour déterminer si le résultat d'un processus de reconnaissance vocale relatif au signal vocal reçu en dernier, parmi les résultats des processus de reconnaissance vocale relatifs aux signaux vocaux, correspond à l'un quelconque des mots de réveil.

2. Dispositif de commande (100) selon la revendication 1, comprenant en outre
une interface de sortie (108) configurée pour émettre un signal de commande à destination de l'appareil de cuisson (1) ;
ladite section de stockage (104) étant configurée en outre pour le stockage d'une pluralité de mots d'action qui sont chacun différents les uns des autres et sont chacun corrélés à une commande parmi une pluralité de commandes,
ladite interface d'entrée (106) étant configurée pour recevoir un deuxième signal vocal consistant en un signal vocal émis à la suite dudit signal vocal, et étant entendu que
en mode veille, dans le cas où le résultat d'un processus de reconnaissance vocale relatif au deuxième signal vocal correspond à l'un quelconque des mots d'action, la section de calcul (102) est configurée pour émettre, à destination de l'appareil de cuisson (1), un signal de commande qui amène la section de chauffage désignée à fonctionner, à l'aide d'une commande corrélée au mot d'action correspondant.

3. Dispositif de commande (100) selon la revendication 1 ou 2, dans lequel
en mode veille, la section de calcul (102) est configurée pour émettre un signal d'information de section de chauffage visant à informer de la section de chauffage désignée parmi la pluralité de sections de chauffage (7, 8, 9).

4. Dispositif de commande (100) selon la revendication 3, dans lequel
l'appareil de cuisson (1) comprend des sources lumineuses (15, 16, 17) ou des sections d'affichage (23, 24, 25) qui sont chacune disposées en étant corrélées à l'une des sections de chauffage (7, 8, 9), et dans lequel
le signal d'information de section de chauffage est un signal qui amène la variation d'un état lumineux de l'une des sources lumineuses (15, 16, 17) ou d'un état d'affichage de l'une des sections d'affichage (23, 24, 25) qui est corrélée à la section de chauffage désignée.

5. Dispositif de commande (100) selon la revendication 3, dans lequel
l'appareil de cuisson (1) comprend un haut-parleur (27), et dans lequel
le signal d'information de section de chauffage est un signal destiné à amener le haut-parleur (27) à émettre une parole indiquant la section de chauffage désignée.

6. Dispositif de commande (100) selon la revendication 5, dans lequel
la section de calcul (102) est configurée pour émettre un signal d'information de fonctionnement qui amène le haut-parleur (27) à émettre une parole indiquant le mot d'action correspondant, à destination de l'appareil de cuisson (1) par le biais de l'interface de sortie (108), conjointement avec l'émission du signal de commande.

7. Dispositif de commande (100) selon l'une quelconque des revendications 1 à 6, dans lequel
les mots de réveil sont chacun modifiables, et dans lequel
lorsqu'au moins un mot de la pluralité de mots de réveil est modifié, la section de stockage (104) est configurée pour réécrire un mot de réveil existant en un mot de réveil consécutif à la modification.

8. Dispositif de commande (100) selon la revendication 2, dans lequel
lorsque l'interface d'entrée (106) reçoit consécutivement des deuxièmes signaux vocaux pendant une période prédéterminée en mode veille, la section de calcul (102) est configurée pour déterminer si le résultat d'un processus de reconnaissance vocale relatif au deuxième signal vocal reçu en dernier, parmi les résultats des processus de reconnaissance vocale relatifs aux deuxièmes signaux vocaux, correspond à l'un quelconque des mots d'action.

9. Dispositif serveur (150) comprenant :
le dispositif de commande (100) selon l'une quelconque des revendications 1 à 8 ;
ledit dispositif serveur (150) étant capable de recevoir le signal vocal émis par le microphone (50).

10. Appareil de cuisson (1) comprenant :
le dispositif de commande (100) selon l'une quelconque des revendications 1 à 8, et
la pluralité de sections de chauffage (7, 8, 9).

11. Appareil de cuisson (1) selon la revendication 10, comprenant en outre :
une section de fonctionnement (19, 20, 21) capable d'être physiquement actionnée par un utilisateur, et
une section de commande (31) capable d'accepter une opération réalisée au moyen de la commande vocale et une opération réalisée au moyen de la section de fonctionnement (19, 20, 21).

12. Appareil de cuisson (1) selon la revendication 11, dans lequel
lorsque la section de commande (31) accepte l'opération réalisée au moyen de la commande vocale et l'opération réalisée au moyen de la section de fonctionnement (19, 20, 21) pendant une période spécifique, la section de commande (31) est configurée pour donner priorité à l'opération réalisée au moyen de la section de fonctionnement (19, 20, 21).

13. Appareil de cuisson (1) selon l'une quelconque des revendications 10 à 12, dans lequel
les sections de chauffage (7, 8, 9) chauffent chacune un récipient de cuisson au gaz ou à l'électricité.
